# EUROPÄISCHE PATENTSCHRIFT

(11) **EP 4 264 382 B1**
(45) Veröffentlichungstag und Bekanntmachung des Hinweises auf die Patenterteilung: **23.07.2025**
(21) Anmeldenummer: 21823254.4
(22) Anmeldetag: 29.11.2021
(51) Int. Cl.: G05B 19/042

(54) **HONEYPOT FÜR EINE VERBINDUNG ZWISCHEN EDGE DEVICE UND CLOUDBASIERTER SERVICEPLATTFORM**
HONEYPOT FOR A CONNECTION BETWEEN AN EDGE DEVICE AND A CLOUD-BASED SERVICE PLATFORM
LEURRE POUR UNE CONNEXION ENTRE UN DISPOSITIF PÉRIPHÉRIQUE ET UNE PLATE-FORME DE SERVICE EN NUAGE

(30) Priorität: 21.12.2020 DE 102020134439
(43) Veröffentlichungstag der Anmeldung: 25.10.2023
(73) Patentinhaber: Endress+Hauser SE+Co. KG, 79689 Maulburg (DE)
(72) Erfinder: BIRGEL, Eric, 79650 Schopfheim (DE); SCHLAGER, Damian, 79415 Bad Bellingen (DE); NOWAK, Claudia, 79106 Freiburg (DE); KUHL, Michael, 87490 Haldenwang (DE); SPRENGER, Johannes, 79541 Lörrach (DE); BRCIC, Mirko, 4310 Rheinfelden (CH)
(74) Vertreter: Endress + Hauser Group Services (Deutschland) AG+Co. KG
(86) Internationale Anmeldenummer: PCT/EP2021/083405
(87) Internationale Veröffentlichungsnummer: WO 2022/135844

(56) Entgegenhaltungen:
- EP-A1- 3 715 982
- WO-A1-2017/035536
- DE-A1- 102018 208 788
- US-A1- 2020 012 249

## Beschreibung

Die Erfindung betrifft ein System der Automatisierungstechnik.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Daten, bzw. Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Feldgeräte der Automatisierungsindustrie liefern neben den Prozesswerten auch Analyse- und Statusdaten, welche für die Wartung und Pflege der Assets als auch zur Bewertung des Zustands des Anlagenteile, in denen sie installiert sind, von entscheidender Bedeutung sind.

Für eine möglichst gute und umfangreiche Analyse der aus den Feldgeräten gewonnen Daten ist es notwendig, sie zentral zu sammeln und differenziert den Personenkreisen und Auswertesystemen zur Verfügung zu stellen, die ihre Expertise für die Bewertung der Zustände von Anlagenteilen und deren Assets einbringen können. Für die hierfür benötigten Funktionen der Datenhaltung, Datensicherheit und Datenbearbeitung gibt es mittlerweile Dienstanbieter, wie beispielweise von der Firma "Endress+Hauser" mit der Plattform "Netilion".

Um diese Daten von Feldgeräten in die sogenannte Cloud (eine cloudfähige Serviceplattformen, welcher per Internet kontaktiert werden kann) im Rahmen von oben genannten digitalen Services transportiert zu können, werden sogenannte Edge Devices eingesetzt, welcher Daten der Feldgeräte mithören oder abrufen und per Internet in die Cloud laden.

Bei den Daten handelt es sich mitunter um sensible Informationen, die nicht in die Hände von Dritten gelangen dürfen. Zu diesem Zweck werden die Daten zwischen Edge Device und Cloud über eine gesicherte Verbindung (bspw. symmetrisch oder asymmetrisch verschlüsselt) übertragen. Wird eine solche Verschlüsselung aufgebrochen, oder gelangt ein Dritter an die Zugangsdaten des Edge Devices oder der Cloud, so kann Anlagenwissen in die Hände von Unbefugten gelangen, da die Kommunikation zwischen Edge Device und Cloud mitgelesen werden könnte.

EP3715982 A1 betrifft ein Verfahren für virtuelle Sensoren in einem Automatisierungssystem und auf einer übergeordneten Maschinenplattform in einer industriellen Anlage, welche zur Ergänzung physikalischer Sensoren an der Anlage betrieben werden

WO2017/035536 A1 bezieht sich auf das Gebiet der Datenverarbeitung, insbesondere auf das Edge Computing zur Bewältigung von großen Datenmengen, die von Industriemaschinen erzeugt werden.

US2020/012249 A1 umfasst ein Verfahren zum Parametrieren eines Feldgeräts der Automatisierungstechnik, welches mit einem Server über ein erstes Kommunikationsnetzwerk in Kommunikationsverbindung steht.

Die Aufgabe der vorliegenden Erfindung besteht daher darin, die Sicherheit der Übertragung von Daten zwischen einem Edge Device und einer cloudbasierten Serviceplattform zu erhöhen.

Die Aufgabe wird durch ein System der Automatisierungstechnik gemäß Patentanspruch 1 gelöst.

Das erfindungsgemäß System ermöglicht es, Daten von Feldgeräten sicher zwischen einem Edge Device und einer cloudbasierten Serviceplattform zu übertragen. Der wesentliche Aspekt der Erfindung besteht darin, dass das Edge Device weitere Feldgeräte, welche sich überhaupt nicht im ersten Anlagenteil befinden, simuliert. Das Edge Device schreibt diese sogenannten virtuellen Feldgeräte in die Livelist, welche an die cloudbasierte Serviceplattform übermittelt wird. Die Livelist stellt die Gesamtheit aller funktionstüchtigen Feldgeräte im ersten Anlageteil dar. Zusätzlich simuliert das Edge Device für jedes der virtuellen Feldgeräte Daten, die an die cloudbasierte Serviceplattform übermittelt werden. Gelingt es einem Angreifer, die Verbindung zwischen Edge Device und cloudbasierter Serviceplattform aufzubrechen, bzw. sich Zugriff auf das Edge Device über die erste Schnittstelle zu beschaffen, so gelangt er an eine Vielzahl von Feldgeräten und deren Daten angezeigt, von denen nur ein Bruchteil überhaupt tatsächlich im ersten Anlagenteil eingesetzte Feldgeräte sind. Der Angreifer kann hierbei nicht unterscheiden, welche Daten dabei tatsächlich von echten Feldgeräten stammen. Dadurch wird der Angreifer verwirrt und es wird Zeit gewonnen, den Angriff abzuwehren, bzw. der Angreifer bricht den Angriff dadurch ab, da er aus den Daten keinen Nutzen ziehen kann.

Dem eigentlichen Benutzer der cloudbasierten Serviceplattform werden jedoch nur die Feldgeräte und deren Daten präsentiert, welche tatsächlich im ersten Anlagenteil enthalten sind.

Feldgeräte, welche im Zusammenhang mit dem erfindungsgemäßen System genannt werden, sind bereits im einleitenden Teil der Beschreibung beispielhaft aufgeführt worden.

Gemäß einer vorteilhaften Ausgestaltung des erfindungsgemäßen Systems ist vorgesehen, dass das Edge Device dazu ausgestaltet ist, die Identifikationen der Feldgeräte und der virtuellen Feldgeräte in der Livelist mittels eines auf dem Edge Device befindlichen öffentlichen Schlüssels zu verschlüsseln, wobei die Serviceplattform ausgestaltet ist, die verschlüsselten Identifikationen mit einem auf der Serviceplattform befindlichen öffentlichen Schlüssels zu entschlüsseln, und wobei die Identifikationen der virtuellen Feldgeräte nicht entschlüsselbar sind. Auf diese Art und Weise ist es für die cloudbasierte Serviceplattform erkennbar, welche der Feldgeräte tatsächlich im ersten Anlagenteil enthalten sind und welche Feldgeräte vom Edge Device simuliert werden.

Gemäß einer vorteilhaften Ausgestaltung des erfindungsgemäßen Systems ist vorgesehen, dass die Serviceplattform dazu ausgestaltet ist, zumindest einen zweiten Anlagenteil mit einer Vielzahl von weiteren virtuellen Feldgeräten zu simulieren, Daten für die weiteren virtuellen Feldgeräte zu generieren, die Identifikationen der weiteren virtuellen Feldgeräte und die generierten Daten in die Livelist einzutragen und die Livelist über eine zweite Schnittstelle, insbesondere eine Schnittstelle zur Anwendungsprogrammierung, zur Verfügung zu stellen. Dadurch wird für weitere Verwirrung beim Angreifer gesorgt. Gelingt es dem Angreifer, sich über die zweite Schnittstelle Zugriff auf die cloudbasierte Serviceplattform zu beschaffen, so wird er mit einer zusätzlichen Vielzahl weiterer Feldgeräte und Daten überfordert. Für den Angreifer ist nicht einmal erkennbar, aus welchen Anlagenteilen die Anlage tatsächlich besteht. Auch in diesem Fall werden dem eigentlichen Benutzer der cloudbasierten Serviceplattform jedoch nur die Feldgeräte und deren Daten präsentiert, welche tatsächlich im ersten Anlagenteil enthalten sind, jedoch keines der virtuellen, bzw. weiteren virtuellen Feldgeräte.

Gemäß einer vorteilhaften Ausgestaltung des erfindungsgemäßen Systems ist vorgesehen, dass das Edge Device, bzw. die Serviceplattform, einen Algorithmus, insbesondere einen Kl-Algorithmus, umfasst, welcher dazu ausgestaltet ist, Historiendaten der Feldgeräte zu analysieren und basierend auf der Analyse die Daten der virtuellen Feldgeräte zu generieren. Die Daten der virtuellen Feldgeräte werden dadurch ähnlich zu den tatsächlich eingesetzten Feldgeräten simuliert, bspw. in ähnlichen Wertebereichen oder ähnlichen Trends folgend. Hierdurch wird der Sicherheitsgrad erhöht, da die Daten der virtuellen Feldgeräte somit sehr plausibel werden und praktisch von den tatsächlich eingesetzten Feldgeräten nicht mehr unterscheidbar sind.

Gemäß einer vorteilhaften alternativen Ausgestaltung des erfindungsgemäßen Systems ist vorgesehen, dass das das Edge Device, bzw. die Serviceplattform, einen Algorithmus, insbesondere einen Kl-Algorithmus, und zumindest ein Modell eines Feldgerätetyps umfasst, wobei das Modell zumindest ein spezifisches Attribut des entsprechenden Feldgerätetyps aufweist, und wobei der Algorithmus dazu ausgestaltet ist, unter Verwendung des Modells die Daten der virtuellen Feldgeräte zu generieren. Der Kl-Algorithmus wird vorab auf verschiedene Feldgerätetypen und deren spezifischen Attributen mittels Trainingsdaten eingelernt. Es kann hierbei vorteilhafterweise die Konfiguration und die Parametrierung tatsächlich im ersten Anlagenteil verwendeter Feldgeräte mit gleichem oder ähnlichen Feldgerätetyp miteinbezogen werden, um den Plausibilitätsgrad zu erhöhen. Spezifische Attribute sind beispielsweise Wertebereiche, Einheiten der Messwerte, spezifisches Abkling- oder Anlaufverhalten, etc.

Gemäß einer vorteilhaften Weiterbildung des erfindungsgemäßen Systems ist vorgesehen, dass das Edge Device eine erste Überwachungsinstanz aufweist, welche dazu ausgestaltet ist, einen Zugriff, bzw. eine Anfrage, von extern über die erste Schnittstelle auf zumindest eines der virtuellen Feldgeräte zu detektieren und einen ersten Report zu erstellen. Dadurch kann festgestellt werden, dass ein Zugriff eines Unbefugten auf das Edge Device erfolgt ist: Der eigentliche Benutzer der cloudbasierten Serviceplattform erhält keinen Zugriff auf die virtuellen Feldgeräte, da diese ihm nicht präsentiert werden und kann daher auch keine Anfragen an diese virtuellen Feldgeräte stellen.

Gemäß einer vorteilhaften Ausgestaltung des erfindungsgemäßen Systems ist vorgesehen, dass die Serviceplattform eine zweite Überwachungsinstanz aufweist, welche dazu ausgestaltet ist, einen Zugriff, bzw. eine Anfrage, von extern über die zweite Schnittstelle auf zumindest eines der weiteren virtuellen Feldgeräte zu detektieren und einen zweiten Report zu erstellen. Analog zu dem im vorherigen Absatz Beschriebenen kann hierdurch ein unbefugter Zugriff auf die cloudbasierte Serviceplattform detektiert werden.

Gemäß einer vorteilhaften Ausgestaltung des erfindungsgemäßen Systems ist vorgesehen, dass der erste Report und/oder der zweite Report eine Information über die Identifikation des virtuellen Feldgerätes, bzw. des weiteren virtuellen Feldgeräts, den Zeitstempel des Zugriffs, bzw. der Anfrage, und/oder die Art des Zugriffs, bzw. der Anfrage, enthalten. Dadurch kann der Angriff analysiert und ein eventuelles Ausmaß nachvollzogen werden.

Gemäß einer vorteilhaften Ausgestaltung des erfindungsgemäßen Systems ist vorgesehen, dass die erste Überwachungsinstanz und/oder die zweite Überwachungsinstanz ausgestaltet sind, nach der Detektion weitere Zugriffe, bzw. Anfragen, auf weitere virtuelle Feldgeräte, zu detektieren und diese in den ersten Report, bzw. in dem zweiten Report, oder in einen weiteren Report einzufügen. Dadurch kann das Verhalten des Angreifers und unter Umständen auch seine Strategie und/oder seine Herkunft analysiert werden.

Gemäß einer ersten Alternative des erfindungsgemäßen System ist vorgesehen, dass die erste Überwachungsinstanz und/oder die zweite Überwachungsinstanz ausgestaltet sind, den ersten Report, bzw. den zweiten Report, und/oder den weiteren Report über einen zweiten Kommunikationskanal an die übergeordnete Einheit zu übermitteln.

Gemäß einer vorteilhaften Ausgestaltung der ersten Alternative des erfindungsgemäßen Systems ist vorgesehen, dass die übergeordnete Einheit dazu ausgestaltet ist, den ersten Report, bzw. den zweiten Report, und/oder den weiteren Report auszuwerten und basierend auf der Auswertung zumindest eine Maßnahme durchzuführen. Auf diese Art und Weise kann unmittelbar auf Feldebene auf den Angriff reagiert werden.

Gemäß einer weiter Alternative des erfindungsgemäßen System ist vorgesehen, dass das System eine Auswerteeinheit, insbesondere cloudbasiert, umfasst wobei die erste Überwachungsinstanz und/oder die zweite Überwachungsinstanz ausgestaltet sind, den ersten Report, bzw. den zweiten Report, und/oder den weiteren Report über einen dritten Kommunikationskanal an die Auswerteeinheit zu übermitteln.

Gemäß einer vorteilhaften Ausgestaltung der zweiten Alternative des erfindungsgemäßen Systems ist vorgesehen, dass die Auswerteeinheit dazu ausgestaltet ist, den ersten Report, bzw. den zweiten Report, und/oder den weiteren Report auszuwerten und basierend auf der Auswertung der übergeordneten Einheit zumindest eine Maßnahme zur Durchführung vorzuschlagen.

In allen Fällen ist es wesentlich, dass die Reports über zum ersten Kommunikationskanal verschiedene Kommunikationskanäle übermittelt werden. Für den Angreifer, der sich in Sicherheit wähnt, ist nicht ersichtlich, dass seine Attacke bereits detektiert und analysiert wird, bzw. Maßnahmen vorbereitet werden. Es kann auch vorgesehen sein, den Angriff dadurch bewusst zu verlängern, um an Daten des Angreifers zu gelangen, bzw. dessen Identität und den Ort des Angriffs, bzw. seine IP-Adresse.

Gemäß einer vorteilhaften Ausgestaltung des erfindungsgemäßen Systems ist vorgesehen, dass die Maßnahme zumindest eine der folgenden ist:
- Zumindest eine Komponente des Kommunikationsnetzwerks ausschalten;
- Eine Zugriffsberechtigung auf das Edge Device und/oder auf die Serviceplattform ändern, bzw. einschränken;
- Die Kommunikation des Edge Devices einschränken;
- Das Servicepersonal der Anlage informieren.

In der Gesamtheit können effektiv ein Angriff festgestellt und Maßnahmen ergriffen werden, ohne dass der Angreifer tatsächliche Daten von den Feldgeräten des ersten Anlagenteils erlangen konnte.

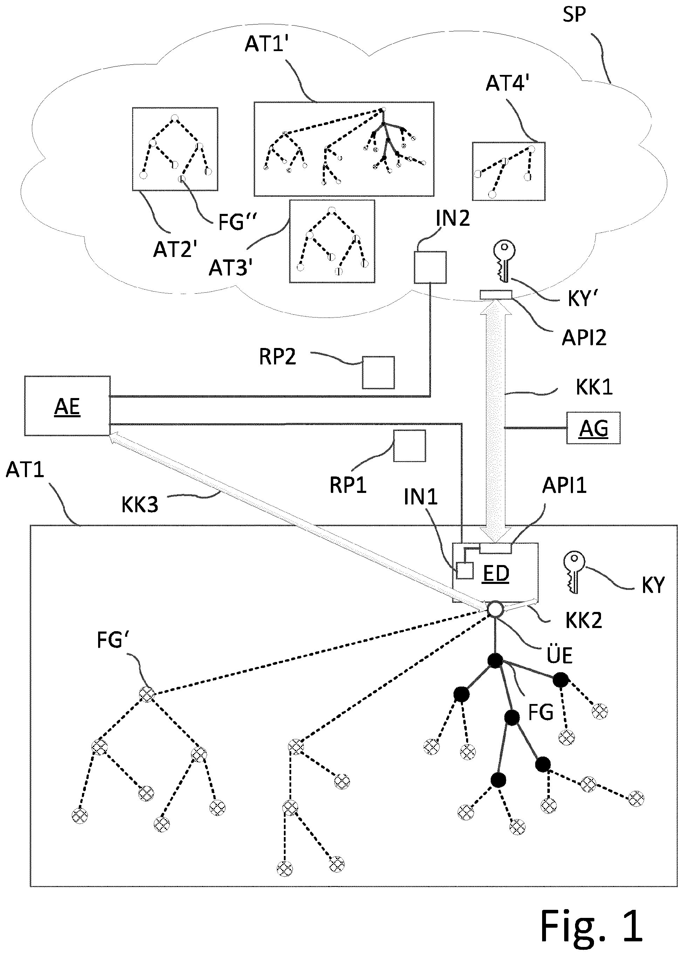

Die Erfindung wird anhand der nachfolgenden Figuren näher erläutert. Es zeigt
Fig. 1: Ausführungsbeispiel des erfindungsgemäßen Systems.

In Fig. 1 ist ein Anlagenteil AT1 einer Anlage der Automatisierungstechnik schematisch abgebildet. Die Anlage kann weiteren Anlagenteile, abgesehen von dem ersten Anlagenteil AT1 aufweisen. In dem ersten Anlagenteil AT1 sind eine Vielzahl von Feldgeräten FG eingesetzt, die zum Erfassen oder Beeinflussen einer physikalischen Größe eines verfahrenstechnischen Prozesses dienen. In Fig. 1 sind die tatsächlich im ersten Anlagenteil AT1 eingesetzten, physischen Feldgeräte, mit einem schwarz gefüllten Kreis dargestellt.

Die Feldgeräte FG stehen untereinander und mit einer übergeordneten Einheit ÜE, insbesondere eine Steuereinheit (bspw. eine SPS) oder einem Gateway über ein Kommunikationsnetzwerk in Kommunikationsverbindung. Alle in Fig. 1 gezeigten übergeordneten Einheiten werden durch einen weißen Kreis repräsentiert- Bei dem Kommunikationsnetzwerk handelt es sich um ein drahtgebundenes Kommunikationsnetzwerk, beispielsweise ein Feldbus der Automatisierungstechnik (bspw. basierend auf den Protokollen HART, Profibus PA/DP, Foundation Fieldbus, etc.) oder ein Ethernet-basiertes Kommunikationsnetzwerk. Alternativ handelt es sich bei dem Kommunikationsnetzwerk um ein drahtloses Kommunikationsnetzwerk, beispielsweise um ein industrielles Drahtlosnetzwerk wie WirelessHART, oder um ein IT-Drahtlosnetzwerk, wie beispielsweise WiFi. Es kann auch vorgesehen sein, dass es sich um ein gemischtes Kommunikationsnetzwerk handelt, bei welchem ein erster Teil der Netzwerksegmente drahtlos ausgestaltet sind und bei welchem ein zweiter Teil der Netzwerksegmente drahtgebunden ausgestaltet sind.

Um Daten der Feldgeräte FG auch außerhalb des Anlagenkontexts zu überwachen, aufzuzeichnen und weiterzuverarbeiten, werden diese an eine cloudbasierte Serviceplattform SP übermittelt. Auf der cloudbasierten Serviceplattform SP werden eine oder mehrere Applikationen oder Anwendungen ausgeführt, mit denen die Überwachung und Weiterverarbeitung der Daten ermöglicht ist. Ein Benutzer kann sich per Internet über einen PC oder ein mobiles Endgerät mit der cloudbasierten Serviceplattform verbinden und nach erfolgreicher Authentifizierung auf die Anwendungen/Applikationen und die Daten der Feldgeräte zugreifen.

Zum Übermitteln der Daten der Feldgeräte FG ist ein Edge Device ED vorgesehen, welches auf Feldebene im ersten Anlagenteil AT1 angeordnet ist. Das Edge Device wird entweder mit der übergeordneten Einheit ÜE, oder mit einem Netzwerksegment des Kommunikationsnetzwerks verbunden. Das Edge Device ED ist dazu ausgestaltet, Daten der Feldgeräte aus dem Datenverkehr des Kommunikationsnetzwerks zu extrahieren und somit mitzuhören, oder die Daten aktiv von den Feldgeräten FG und/oder der übergeordneten Einheit ÜE abzufragen. Hierzu befinden sich auf dem Edge Device ED Profile oder sogenannte Mikroservices, welche dem Edge Device ED vorgeben, welche Daten welcher Feldgeräte FG in welcher Häufigkeit mitzuhören, bzw. abzufragen und wie diese vor dem Übermitteln an die cloudbasierte Serviceplattform SP ggf. zu verarbeiten sind.

Das Übermitteln der Daten der Feldgeräte FG erfolgt via einem ersten Kommunikationskanal KK1 über das Internet. Konkret werden die Daten zwischen einer ersten Schnittstelle API1 des Edge Devices ED und einer zweiten Schnittstelle API2 der cloudbasierten Serviceplattform SP ausgetauscht. Die Daten der Feldgeräte FG werden hierfür vor dem Übermitteln in einer sogenannten Livelist zusammengestellt. Die Livelist enthält alle momentan aktiven, bzw. im Edge Device ED definierten Feldgeräte FG und deren aktuellen Daten.

Der Datenverkehr über den ersten Kommunikationskanals KK1 zwischen Edge Device ED und cloudbasierter Serviceplattform SP wird verschlüsselt. Hierfür weist das Edge Device ED1 zum Verschlüsseln einen privaten Schlüssel KY auf. Die cloudbasierte Serviceplattform SP weist zum Entschlüsseln einen zum privaten Schlüssel KY korrespondierenden öffentlichen Schlüssel KY' auf.

Für einen Angreifer AG gibt es mehrere potentielle Angriffspunkte in diesem System, um an die Daten der Feldgeräte FG zu gelangen:
- Der Angreifer könnte den Datenverkehr zwischen Edge Device und vice versa mithören und Kenntnis von dem öffentlichen Schlüssel KY erlangen, bzw. die verschlüsselten Daten andersweitig entschlüsseln.
- Der Angreifer könnte sich über die erste Schnittstelle API1 Zugriff auf das Edge Device ED verschaffen und die Daten direkt von dort auslesen.
- Der Angreifer könnte sich über die zweite Schnittstelle API2 Zugriff auf das Edge Device ED verschaffen und die dort gespeicherten Daten auslesen.

Nachfolgend ist das erfindungsgemäße Konzept veranschaulicht, um die Gefahr eines Angriffs von außerhalb zu verringern. Das Konzept behandelt weniger den Aspekt, den unbefugten Zugriff zu erschweren, sondern, dass im Falle, dass sich der Angreifer unbefugten Zugriff verschafft hat, ihn insofern zu verwirren, dass er mit den erlangten Daten nichts anzufangen weiß.

Hierfür erstellt das Edge Device ED eine Vielzahl weiterer Feldgeräte FG' (in der Fig. 1 als schraffierte Kreise dargestellt), welche virtuell ausgestaltet und nicht tatsächlich im ersten Anlagenteil AT1 vorhanden sind. Für jedes der virtuellen Feldgeräte FG simuliert das Edge Device ED Daten und überträgt diese in der Livelist an die cloudbasierte Serviceplattform SP. Die Identifikationen der Feldgeräte FG werden hierbei mit dem privaten Schlüssel KY, bzw. einem weiteren privaten Schlüssel, speziell verschlüsselt. Die Identifikationen der virtuellen Feldgeräte FG' werden jedoch nicht auf diese Art und Weise verschlüsselt. Auf diese Art und Weise kann die cloudbasierte Serviceplattform SP durch Entschlüsseln der Identifikationen mit dem dazugehörigen öffentlichen Schlüssel KY' identifizieren, welche Feldgeräte FG tatsächlich in der Anlage enthalten sind und bei welchen Feldgeräten es sich um virtuelle Feldgeräte FG' handelt. Dem Benutzer der Applikation/Anwendung auf der cloudbasierten Serviceplattform werden nur die tatsächlich vorhandenen Feldgeräte FG angezeigt. Einem Angreifer jedoch, der sich auf einem der drei obig beschriebenen Wege Zugriff auf die Daten verschafft, ist es nicht ersichtlich, dass es sich bei einem Großteil der Daten um simulierte Daten handelt.

Damit der Grad der Verwirrung möglichst hoch ist, sind folgende beiden Aspekte besonders wichtig:
1.) Das Verhältnis der virtuellen Feldgeräte FG' zu den tatsächlichen realen Feldgeräten FG muss möglichst hoch sein. Häufig benötigt ein Angreifer mehr als nur die vom Edge Device ausgelesenen Daten. Er wird daher versuchen, sich über die Identifikationsinformationen in der Livelist über das Edge Device ED Zugriff zu den sensiblen Daten eines Feldgeräts FG, insbesondere dessen Parametereinstellungen, zu beschaffen. Je höher das Verhältnis ist (bspw. ab Faktor 10), desto unwahrscheinlicher ist es, dass ein Angreifer die Daten eines tatsächlich in der Anlage eingesetzten Feldgeräts FG ausliest.
2.) Die Daten der virtuellen Feldgeräte FG' sollen auf den ersten Blick nicht unterscheidbar von den Daten der realen Feldgeräte FG sein. Die Daten der virtuellen Feldgeräte FG' sollen daher möglohcst plausibel sein. Hierfür greift die Software des Edge Devices ED auf Historiendaten von Feldgeräten ähnlichen Typs der virtuellen Feldgeräte FG oder auf einen mit Trainingsdaten von Feldgeräten eingelernten Kl-Algorithmus zu. Zudem muss auch der Typ eines virtuellen Feldgeräts plausibel sein und zu dem Typ der Anlage passen.

Zur weiteren Verwirrung und somit zur Erhöhung der Sicherheit erstellt die cloudbasierte Serviceplattform eine Vielzahl weiterer, virtueller Anlagenteile AT2', AT3', AT4'. Jeder dieser Anlagenteile AT2', AT3', AT4'weist wiederum eine Vielzahl virtueller Feldgeräte FG" und virtueller übergeordneter Einheiten auf, für welche wiederum Daten simuliert werden. Für den Angreifer ist nicht ersichtlich, welcher Anlagenteil AT1 tatsächlich real in der Anlage vorhanden ist.

Das erfindungsgemäße System sieht es weiterhin auch vor, einen Angriff eines Unbefugten zu detektieren. Hierfür weist das Edge Device ED eine erste Überwachungsinstanz IN1 und die cloudbasierte Serviceplattform SP eine zweite Überwachungsinstanz IN2 auf. Die erste Überwachungsinstanz IN1 überprüft, auf welche Feldgeräte FG, FG' ein Zugriff von außerhalb. Die zweite Überwachungsinstanz IN2 überprüft, auf welche Daten welcher Feldgeräte FG, FG', FG" auf der cloudbasierten Serviceplattform SP zugegriffen wird. Wird durch eine der beiden Überwachungsinstanzen IN1, IN2 detektiert, dass ein Zugriff, bzw. eine Zugriffsanfrage auf ein virtuelles Feldgerät FG', bzw. ein weiteres virtuelles Feldgerät FG" erfolgt, so erstellt die jeweilige, diesen Vorgang detektierende Überwachungsinstanz IN1, IN2 einen ersten, bzw. einen zweiten Report RP1, RP2; die erste Überwachungsinstanz IN1 erstellt den ersten Report RP1, die zweite Überwachungseinheit IN2 entsprechend den zweiten Report RP2. Ein Report RP1, RP2 enthält Informationen über die Identifikation des virtuellen Feldgeräts FG', bzw. des weiteren virtuellen Feldgeräts FG", auf welches zugegriffen wurde, sowie das Datum und die Uhrzeit des Zugriffs.

Der entsprechende Report RP1, RP2 wird über einen zum ersten Kommunikationskanal KK1 verschiedenen zweiten Kommunikationskanal KK2 von dem Edge Device ED, bzw. der cloudbasierten Serviceplattform SP an die übergeordnete Einheit ÜE des ersten Anlagenteils AT1 übermittelt.

Alternativ wird der entsprechende Report RP1, RP2 über einen zum ersten Kommunikationskanal KK1 verschiedenen dritten Kommunikationskanal KK3 von dem Edge Device ED, bzw. der cloudbasierten Serviceplattform SP an eine Auswerteeinheit AE übermittelt. Diese Auswerteeinheit AE kann insbesondere als Applikation auf der cloudbasierten Serviceplattform etabliert sein.

Durch die zum ersten Kommunikationskanal KK1 verschiedenen Kommunikationskanäle KK2, KK3 erfährt der Angreifer AE nicht, dass sein unbefugter Zugriff bereits detektiert worden ist. Der Angreifer AE kann so weiter analysiert werden, bzw. kann ein Gegenangriff gestartet werden, ohne dass der Angreifer AE dies bemerkt. Beispielsweise kann seine Position und/oder seine IP-Adresse detektiert werden.

Die übergeordnete Einheit ÜE und/oder die Auswerteeinheit AE wertet den entsprechenden Report RP1, RP2 aus und ermittelt eine Maßnahme, um den Anlagenteil AT1, bzw. dessen Feldgeräte FG weiter zu schützen. Beispielsweise kann, abhängig vom Typ des Zugriffs auf die virtuellen Feldgeräte FG', FG" vorgesehen sein, das Anlagenpersonal zu informieren, entsprechende Anlagenteile herunterzufahren und/oder eine Zugriffsberechtigung auf das Edge Device ED und/oder auf die cloudbasierte Serviceplattform SP zu ändern, bzw einzuschränken.

Durch das erfindungsgemäße System, welches einen Honeypot-Mechanismus für die Anlage umsetzt, kann ein Angreifer effektiv daran gehindert werden, anlagenrelevante Daten auszulesen, bzw. entsprechende Maßnahmen zur weiteren Prävention vorgeschlagen und durchgeführt werden.

### Bezugszeichenliste

- API1, API2: erste und zweite Schnittstelle
- AT1, AT1', AT2', AT3', AT4': Anlagenteile
- ED: Edge Device
- FG: Feldgeräte
- FG': virtuelle Feldgeräte
- FG": weitere virtuelle Feldgeräte
- IN1: erste Überwachungsinstanz
- IN2: zweite Überwachungsinstanz
- KK1, KK2, KK3: Kommunikationskanäle
- KY: privater Schlüssel des Edge Devices
- KY': öffentlicher Schlüssel der cloudbasierten Serviceplattform
- RP1, RP2: erster und zweiter Report
- SP: cloudbasierte Serviceplattform
- ÜE: übergeordnete Einheit

## Patentansprüche

1. System der Automatisierungstechnik, umfassend:
- einen ersten Anlagenteil (AT1), bestehend aus einer Vielzahl von Feldgeräten (FG) und einer übergeordneten Einheit (ÜE), welche Feldgeräte (FG) dazu ausgestaltet sind, Messwerte zumindest einer physikalischen Größe eines verfahrenstechnischen Prozesses zu erfassen und/oder zumindest eine physikalische Größe des verfahrenstechnischen Prozesses zu beeinflussen,
wobei die Feldgeräte (FG) untereinander und mit der übergeordneten Einheit (ÜE) über ein Kommunikationsnetzwerk in Kommunikationsverbindung stehen, wobei die Feldgeräte (FG) dazu ausgestaltet sind, Daten, insbesondere die Messwerte, Statuswerte, und/oder Diagnosedaten, an die übergeordnete Einheit (ÜE) zu übermitteln, und wobei die übergeordnete Einheit (ÜE) dazu ausgestaltet ist, Daten, insbesondere Stellwerte und/oder Bedientelegramme, an die Feldgeräte (FG) zu übertragen;
- ein Edge Device (ED), welches Teil des Kommunikationsnetzwerks ist, wobei das Edge Device (ED) dazu ausgestaltet ist, zumindest einen Teil der von den Feldgeräten (FG) und von der übergeordneten Einheit (ÜE) übermittelten Daten mitzuhören und/oder weitere Daten von den Feldgeräten (FG) und/oder von der übergeordneten Einheit (ÜE) abzufragen, wobei das Edge Device (ED) dazu ausgestaltet ist, eine Livelist zu generieren, welche Livelist eine Identifikation von jedem der Feldgeräte (FG), und die jeweils aktuell abgefragten, bzw. mitgehörten Daten enthält, wobei das Edge Device (ED) dazu ausgestaltet ist, eine Vielzahl von virtuellen Feldgeräten (FG') zu simulieren, Daten für die virtuelle Feldgeräte (FG') zu generieren, die Identifikationen der virtuellen Feldgeräte (FG') und die generierten Daten in die Livelist einzutragen, und die Livelist über eine erste Schnittstelle (API1), insbesondere eine Schnittstelle zur Anwendungsprogrammierung, zur Verfügung zu stellen;
- eine cloudbasierte Serviceplattform (SP), wobei das Edge Device (ED) mit der cloudbasierten Serviceplattform (SP) per Internet über einen ersten Kommunikationskanal (KK1) in Kommunikationsverbindung steht,
wobei das Edge Device (ED) dazu ausgestaltet ist, in regelmäßigen Zeitabständen die mit den jeweils aktuellen abgefragten, bzw. mitgehörten Daten als Livelist an die cloudbasierte Serviceplattform (SP) zu übermitteln, so dass in dem Fall, dass es einem Angreifer gelingt, die Verbindung zwischen dem Edge Device (ED) und der cloudbasierten Serviceplattform (SP) aufzubrechen, ihm eine Vielzahl von Feldgeräten (FG) und deren Daten angezeigt werden, von denen nur ein Bruchteil tatsächlich im ersten Anlagenteil (AT1) eingesetzt sind und wobei die cloudbasierte Serviceplattform (SP) dazu ausgestaltet ist, die Livelist derartig aufzubereiten und/oder zu präsentieren, dass die Daten der virtuellen Feldgeräte (FG') unberücksichtigt sind und einem Benutzer der cloudbasierten Serviceplattform (SP) nur die Feldgeräte (FG) und deren Daten präsentiert werden, welche tatsächlich im ersten Anlagenteil (AT1) enthalten sind.

2. System nach Anspruch 1, wobei das Edge Device (ED) dazu ausgestaltet ist, die Identifikationen der Feldgeräte (FG) und der virtuellen Feldgeräte (FG') in der Livelist mittels eines auf dem Edge Device (ED) befindlichen öffentlichen Schlüssels (KY') zu verschlüsseln, wobei die cloudbasierte Serviceplattform (SP) ausgestaltet ist, die verschlüsselten Identifikationen mit einem auf der cloudbasierten Serviceplattform (SP) befindlichen öffentlichen Schlüssels (KY') zu entschlüsseln, und wobei die Identifikationen der virtuellen Feldgeräte (FG') nicht entschlüsselbar sind.

3. System nach Anspruch 1 oder 2, wobei die cloudbasierte Serviceplattform (SP) dazu ausgestaltet ist, zumindest einen zweiten Anlagenteil (AT2', AT3', AT4') mit einer Vielzahl von weiteren virtuellen Feldgeräten (FG") zu simulieren, Daten für die weiteren virtuellen Feldgeräte (FG") zu generieren, die Identifikationen der weiteren virtuellen Feldgeräte (FG") und die generierten Daten in die Livelist einzutragen und die Livelist über eine zweite Schnittstelle (API2), insbesondere eine Schnittstelle zur Anwendungsprogrammierung, zur Verfügung zu stellen.

4. System nach zumindest einem der vorherigen Ansprüche, wobei das Edge Device (ED), bzw. die cloudbasierte Serviceplattform (SP), einen Algorithmus, insbesondere einen Kl-Algorithmus, umfasst, welcher dazu ausgestaltet ist, Historiendaten der Feldgeräte (FG) zu analysieren und basierend auf der Analyse die Daten der virtuellen Feldgeräte (FG') zu generieren.

5. System nach zumindest einem der Ansprüche 1 bis 3, wobei das das Edge Device (ED), bzw. die cloudbasierte Serviceplattform (SP), einen Algorithmus, insbesondere einen Kl-Algorithmus, und zumindest ein Modell eines Feldgerätetyps umfasst, wobei das Modell zumindest ein spezifisches Attribut des entsprechenden Feldgerätetyps aufweist, und wobei der Algorithmus dazu ausgestaltet ist, unter Verwendung des Modells die Daten der virtuellen Feldgeräte (FG') zu generieren.

6. System nach zumindest einem der vorherigen Ansprüche, wobei das Edge Device (ED) eine erste Überwachungsinstanz (IN1) aufweist, welche dazu ausgestaltet ist, einen Zugriff, bzw. eine Anfrage, von extern über die erste Schnittstelle (API1) auf zumindest eines der virtuellen Feldgeräte (FG') zu detektieren und einen ersten Report (RP1) zu erstellen.

7. System nach zumindest einem der vorherigen Ansprüche, wobei die cloudbasierte Serviceplattform (SP) eine zweite Überwachungsinstanz (IN2) aufweist, welche dazu ausgestaltet ist, einen Zugriff, bzw. eine Anfrage, von extern über die zweite Schnittstelle (API2) auf zumindest eines der weiteren virtuellen Feldgeräte (FG") zu detektieren und einen zweiten Report (RP2) zu erstellen.

8. System nach zumindest einem der Ansprüche 6 oder 7, wobei der erste Report (RP1) und/oder der zweite Report (RP2) eine Information über die Identifikation des virtuellen Feldgerätes (FG'), bzw. des weiteren virtuellen Feldgeräts (FG"), den Zeitstempel des Zugriffs, bzw. der Anfrage, und/oder die Art des Zugriffs, bzw. der Anfrage, enthalten.

9. System nach zumindest einem der Ansprüche 6 bis 8, wobei die erste Überwachungsinstanz (IN1) und/oder die zweite Überwachungsinstanz (IN2) ausgestaltet sind, nach der Detektion weitere Zugriffe, bzw. Anfragen, auf weitere virtuelle Feldgeräte (FG"), zu detektieren und diese in den ersten Report (RP1), bzw. in dem zweiten Report (RP2), oder in einen weiteren Report einzufügen.

10. System nach zumindest einem der Ansprüche 6 bis 9, wobei die erste Überwachungsinstanz (IN1) und/oder die zweite Überwachungsinstanz (IN2) ausgestaltet sind, den ersten Report (RP1), bzw. den zweiten Report (RP2), und/oder den weiteren Report über einen zweiten Kommunikationskanal (KK2) an die übergeordnete Einheit (ÜE) zu übermitteln.

11. System nach Anspruch 10, wobei die übergeordnete Einheit (ÜE) dazu ausgestaltet ist, den ersten Report (RP1), bzw. den zweiten Report (RP1), und/oder den weiteren Report auszuwerten und basierend auf der Auswertung zumindest eine Maßnahme durchzuführen.

12. System nach zumindest einem der Ansprüche 6 bis 9, weiter umfassend eine Auswerteeinheit, insbesondere cloudbasiert, wobei die erste Überwachungsinstanz (IN1) und/oder die zweite Überwachungsinstanz (IN2) ausgestaltet sind, den ersten Report (RP1), bzw. den zweiten Report (RP2), und/oder den weiteren Report über einen dritten Kommunikationskanal (KK1) an die Auswerteeinheit zu übermitteln.

13. System nach Anspruch 12, wobei die Auswerteeinheit dazu ausgestaltet ist, den ersten Report (RP1), bzw. den zweiten Report (RP1), und/oder den weiteren Report auszuwerten und basierend auf der Auswertung der übergeordneten Einheit (ÜE) zumindest eine Maßnahme zur Durchführung vorzuschlagen.

14. System nach Anspruch 11 oder Anspruch 13, wobei die Maßnahme zumindest eine der folgenden ist:
- Zumindest eine Komponente des Kommunikationsnetzwerks ausschalten;
- Eine Zugriffsberechtigung auf das Edge Device (ED) und/oder auf die cloudbasierte Serviceplattform (SP) ändern, bzw. einschränken;
- Die Kommunikation des Edge Devices (ED) einschränken;
- Das Servicepersonal der Anlage informieren.

## Claims

1. An automation system, comprising:
- A first system part (AT1), consisting of a large number of field devices (FG) and a higher-level unit (ÜE), said field devices (FG) being configured to record measured values of at least one physical variable of a process engineering process and/or to influence at least one physical variable of the process engineering process,
wherein the field devices (FG) are in communication with each other and with the higher-level unit (ÜE) via a communication network, wherein the field devices (FG) are configured to transmit data, in particular the measured values, status values, and/or diagnostic data, to the higher-level unit (ÜE), and wherein the higher-level unit (ÜE) is configured to transmit data, in particular control values and/or operating telegrams, to the field devices (FG);
- an edge device (ED), which is part of the communication network, wherein the edge device (ED) is configured to listen to at least part of the data transmitted by the field devices (FG) and by the higher-level unit (ÜE) and/or to query further data from the field devices (FG) and/or from the higher-level unit (ÜE), wherein the edge device (ED) is configured to generate a live list, which contains an identification for each of the field devices (FG) and the data currently being queried or listened to, wherein the edge device (ED) is configured to simulate a large number of virtual field devices (FG'), to generate data for the virtual field devices (FG'), to enter the identifications for the virtual field devices (FG') and the generated data into the live list, and to make the live list available via a first interface (API1), in particular an application programming interface;
- a cloud-based service platform (SP), wherein the edge device (ED) is in communication with the cloud-based service platform (SP) via the Internet using a first communication channel (KK1),
wherein the edge device (ED) is configured to transmit the current data being interrogated or listened to at regular intervals as a live list to the cloud-based service platform (SP), so that in the event that an attacker succeeds in breaking the connection between the edge device (ED) and the cloud-based service platform (SP), the attacker is shown a large number of field devices (FG) and their data, only a fraction of which are actually used in the first system part (AT1), and wherein the cloud-based service platform (SP) is configured to prepare and/or present the live list in such a way that the data from the virtual field devices (FG') is not taken into account, and only the field devices (FG) and their data that are actually contained in the first system part (AT1) are presented to a user of the cloud-based service platform (SP).

2. The system as claimed in claim 1, wherein the edge device (ED) is configured to encrypt the identifications of the field devices (FG) and the virtual field devices (FG') in the live list by means of a public key (KY') located on the Edge Device (ED), wherein the cloud-based service platform (SP) is configured to decrypt the encrypted identifications with a public key (KY') located on the cloud-based service platform (SP), and wherein the identifications of the virtual field devices (FG') cannot be decrypted.

3. The system as claimed in claim 1 or 2, wherein the cloud-based service platform (SP) is configured to simulate at least a second system part (AT2', AT3', AT4') with a large number of further virtual field devices (FG"), to generate data for the further virtual field devices (FG"), to enter the identifications for the further virtual field devices (FG") and the generated data into the live list, and to make the live list available via a second interface (API2), in particular an application programming interface.

4. The system as claimed in at least one of the preceding claims, wherein the edge device (ED) or the cloud-based service platform (SP) comprises an algorithm, in particular an AI algorithm, which is configured to analyze history data from the field devices (FG) and to generate the data for the virtual field devices (FG') based on the analysis.

5. The system as claimed in at least one of claims 1 to 3, wherein the edge device (ED) or the cloud-based service platform (SP) comprises an algorithm, in particular an AI algorithm, and at least one model of a field device type, wherein the model has at least one specific attribute of the corresponding field device type, and wherein the algorithm is configured to generate the data for the virtual field devices (FG') using the model.

6. The system as claimed in at least one of the preceding claims, wherein the edge device (ED) has a first monitoring instance (IN1) which is configured to detect an access or a request to at least one of the virtual field devices (FG') from an external source via the first interface (API1), and to generate a first report (RP1).

7. The system as claimed in at least one of the preceding claims, wherein the cloud-based service platform (SP) has a second monitoring instance (IN2) which is configured to detect an access or a request to at least one of the further virtual field devices (FG") from an external source via the second interface (API2), and to generate a second report (RP2).

8. The system as claimed in at least one of claims 6 or 7, wherein the first report (RP1) and/or the second report (RP2) contain(s) information about the identification of the virtual field device (FG') or the further virtual field device (FG"), the timestamp of the access or the request, and/or the type of access or request.

9. The system as claimed in at least one of claims 6 to 8, wherein the first monitoring instance (IN1) and/or the second monitoring instance (IN2) is/are configured to detect further accesses or requests to further virtual field devices (FG") after detection and to insert these into the first report (RP1), or into the second report (RP2), or into a further report.

10. The system as claimed in at least one of claims 6 to 9, wherein the first monitoring instance (IN1) and/or the second monitoring instance (IN2) is/are configured to transmit the first report (RP1), or the second report (RP2), and/or the further report to the higher-level unit (ÜE) via a second communication channel (KK2).

11. The system as claimed in claim 10, wherein the higher-level unit (ÜE) is designed to evaluate the first report (RP1), or the second report (RP1), and/or the further report, and to carry out at least one action based on the evaluation.

12. The system as claimed in at least one of claims 6 to 9, further comprising an evaluation unit, in particular cloud-based, wherein the first monitoring instance (IN1) and/or the second monitoring instance (IN2) is/are configured to transmit the first report (RP1), or the second report (RP2), and/or the further report to the evaluation unit via a third communication channel (KK1).

13. The system as claimed in claim 12, wherein the evaluation unit is configured to evaluate the first report (RP1), or the second report (RP1), and/or the further report, and to propose at least one action to be carried out based on the evaluation of the higher-level unit (ÜE).

14. The system as claimed in claim 11 or claim 13, wherein the action is at least one of the following:
- Switching off at least one component of the communication network;
- Changing or restricting access authorization to the edge device (ED) and/or to the cloud-based service platform (SP);
- Restricting communication from the edge device (ED);
- Informing the system's service personnel.

## Revendications

1. Système de la technique d'automatisation, lequel système comprend :
- une première partie d'installation (AT1), laquelle est constituée d'une pluralité d'appareils de terrain (FG) et d'une unité supérieure (ÜE), lesquels appareils de terrain (FG) sont conçus pour saisir des valeurs mesurées d'au moins une grandeur physique d'un process et/ou pour influencer au moins une grandeur physique du même process,
les appareils de terrain (FG) étant en liaison de communication entre eux et avec l'unité supérieure (ÜE) par l'intermédiaire d'un réseau de communication, les appareils de terrain (FG) étant conçus pour transmettre des données, notamment les valeurs mesurées, les valeurs d'état et/ou les données de diagnostic, à l'unité supérieure (ÜE), et l'unité supérieure étant conçue pour transmettre des données, notamment des valeurs de réglage et/ou des télégrammes de commande, aux appareils de terrain (FG) ;
- un Edge Device (ED), lequel fait partie du réseau de communication, l'Edge Device (ED) étant conçu pour écouter au moins une partie des données transmises par les appareils de terrain (FG) et par l'unité supérieure et/ou pour consulter d'autres données des appareils de terrain (FG) et/ou de l'unité supérieure (ÜE), l'Edge Device (ED) étant conçu pour générer une liste d'appareils joignables, laquelle liste d'appareils joignables contient une identification de chacun des appareils de terrain (FG) et les données actuellement consultées ou écoutées, l'Edge Device (ED) étant conçu pour simuler une pluralité d'appareils de terrain virtuels (FG'), pour générer des données pour les appareils de terrain virtuels (FG'), pour entrer les identifications des appareils de terrain virtuels (FG') et les données générées dans la liste d'appareils joignables, et pour mettre à disposition la liste d'appareils joignables via une première interface (API1), notamment une interface de programmation d'application ;
- une plateforme de service (SP) basée sur le cloud, l'Edge Device (ED) étant en liaison de communication avec la plateforme de service (SP) basée sur le cloud via Internet par l'intermédiaire d'un premier canal de communication (KK1), l'Edge Device (ED) étant conçu pour transmettre à intervalles de temps réguliers, à la plateforme de service (SP) basée sur le cloud, la liste d'appareils joignables avec les données actuellement consultées ou écoutées respectives, de sorte que si un intrus parvient à rompre la liaison entre l'Edge Device (ED) et la plateforme de service (SP) basée sur le cloud, une pluralité d'appareils de terrain (FG) et leurs données lui sont présentés, dont seule une fraction est effectivement utilisée dans la première partie de l'installation (AT1) et la plateforme de service (SP) basée sur le cloud étant conçue pour préparer et/ou présenter la liste des appareils joignables de telle sorte que les données des appareils de terrain virtuels (FG') ne sont pas prises en compte et que seuls les appareils de terrain (FG) et leurs données qui sont effectivement contenus dans la première partie de l'installation (AT1) sont présentés à un utilisateur de la plateforme de service (SP) basée sur le cloud.

2. Système selon la revendication 1, pour lequel l'Edge Device (ED) est conçu pour crypter les identifications des appareils de terrain (FG) et des appareils de terrain virtuels (FG') dans la liste des appareils joignables au moyen d'une clé publique (KY') se trouvant sur l'Edge Device (ED), la plateforme de service (SP) basée sur le cloud étant conçue pour décrypter les identifications cryptées avec une clé publique (KY') se trouvant sur la plateforme de service (SP) basée sur le cloud, et les identifications des appareils de terrain virtuels (FG') ne pouvant pas être décryptées.

3. Système selon la revendication 1 ou 2, pour lequel la plateforme de service (SP) basée sur le cloud est conçue pour simuler au moins une deuxième partie d'installation (AT2', AT3', AT4') avec une pluralité d'appareils de terrain virtuels (FG") supplémentaires, pour générer des données pour les appareils de terrain virtuels (FG") supplémentaires, pour entrer les identifications des appareils de terrain virtuels (FG") supplémentaires et les données générées dans la liste des appareils joignables et pour mettre la liste des appareils joignables à disposition par l'intermédiaire d'une deuxième interface (API2), notamment une interface de programmation d'application.

4. Système selon au moins l'une des revendications précédentes, pour lequel l'Edge Device (ED) ou la plateforme de service (SP) basée sur le cloud comprend un algorithme, notamment un algorithme d'intelligence artificielle, lequel est conçu pour analyser des données historiques des appareils de terrain (FG) et pour générer, sur la base de l'analyse, les données des appareils de terrain virtuels (FG').

5. Système selon au moins l'une des revendications 1 à 3, pour lequel l'Edge Device (ED) ou la plateforme de service (SP) basée sur le cloud comprend un algorithme, notamment un algorithme d'intelligence artificielle, et au moins un modèle d'un type d'appareil de terrain, le modèle présentant au moins un attribut spécifique du type d'appareil de terrain correspondant, et l'algorithme étant conçu pour générer, en utilisant le modèle, les données des appareils de terrain virtuels (FG').

6. Système selon au moins l'une des revendications précédentes, pour lequel l'Edge Device (ED) comprend une première instance de surveillance (IN1), laquelle est configurée pour détecter un accès, ou une demande, de l'extérieur via la première interface (API1) à au moins l'un des appareils de terrain virtuels (FG') et pour générer un premier rapport (RP1).

7. Système selon au moins l'une des revendications précédentes, pour lequel la plateforme de service (SP) basée sur le cloud présente une deuxième instance de surveillance (IN2), laquelle est configurée pour détecter un accès, ou une demande, de l'extérieur via la deuxième interface (API2) à au moins l'un des appareils de terrain virtuels (FG") supplémentaires et pour générer un deuxième rapport (RP2).

8. Système selon au moins l'une des revendications 6 ou 7, pour lequel le premier rapport (RP1) et/ou le deuxième rapport (RP2) contient/contiennent une information sur l'identification de l'appareil de terrain virtuel (FG') ou de l'appareil de terrain virtuel (FG") supplémentaire, l'horodatage de l'accès, ou de la demande, et/ou le type d'accès ou de demande.

9. Système selon au moins l'une des revendications 6 à 8, pour lequel la première instance de surveillance (IN1) et/ou la deuxième instance de surveillance (IN2) sont configurées pour détecter, après la détection, d'autres accès, ou demandes, à des appareils de terrain virtuels (FG") supplémentaires et pour les insérer dans le premier rapport (RP1) ou dans le deuxième rapport (RP2) ou dans un rapport supplémentaire.

10. Système selon au moins l'une des revendications 6 à 9, pour lequel la première instance de surveillance (IN1) et/ou la deuxième instance de surveillance (IN2) sont configurées pour transmettre le premier rapport (RP1) ou le deuxième rapport (RP2) et/ou le rapport supplémentaire à l'unité supérieure via un deuxième canal de communication (KK2).

11. Système selon la revendication 10, pour lequel l'unité supérieure est conçue pour évaluer le premier rapport (RP1) ou le deuxième rapport (RP1), et/ou le rapport supplémentaire, et pour exécuter au moins une mesure sur la base de l'évaluation.

12. Système selon au moins l'une des revendications 6 à 9, lequel système comprend en outre une unité d'évaluation, notamment basée sur le cloud, la première instance de surveillance (IN1) et/ou la deuxième instance de surveillance (IN2) étant configurées pour transmettre le premier rapport (RP1) ou le deuxième rapport (RP2), et/ou le rapport supplémentaire à l'unité d'évaluation via un troisième canal de communication (KK3).

13. Système selon la revendication 12, pour lequel l'unité d'évaluation est conçue pour évaluer le premier rapport (RP1) ou le deuxième rapport (RP1) et/ou le rapport supplémentaire et, sur la base de l'évaluation, pour proposer à l'unité supérieure au moins une mesure à mettre en œuvre.

14. Système selon la revendication 11 ou la revendication 13, pour lequel la mesure est au moins l'une des suivantes :
- Désactiver au moins un composant du réseau de communication ;
- Modifier ou restreindre une autorisation d'accès à l'Edge Device (ED) et/ou à la plate-forme de service (SP) basée sur le cloud ;
- Limiter la communication de l'Edge Device (ED) ;
- Informer le personnel de service de l'installation.
